# EUROPEAN PATENT APPLICATION

(11) **EP 3 913 221 A1**
(43) Date of publication of application: **24.11.2021**
(21) Application number: 19910291.4
(22) Date of filing: 14.11.2019
(51) Int. Cl.: F04B 39/06, F25B 1/00, F24F 11/48

(54) **AIR CONDITIONER AND PREHEATING OPERATION METHOD**

(30) Priority: 15.01.2019 JP 2019004255
(71) Applicant: DAIKIN INDUSTRIES, LTD., Osaka-shi, Osaka 530-8323 (JP)
(72) Inventor: KOTERA, Keito, Osaka-shi, Osaka 530-8323 (JP); FUJIWARA, Masahide, Osaka-shi, Osaka 530-8323 (JP); OGAWA, Hironori, Osaka-shi, Osaka 530-8323 (JP); OKUI, Takamune, Osaka-shi, Osaka 530-8323 (JP); NAKANISHI, Yuuko, Osaka-shi, Osaka 530-8323 (JP); HIRAOKA, Nobuyasu, Osaka-shi, Osaka 530-8323 (JP)
(74) Representative: Hoffmann Eitle
(86) International application number: PCT/JP2019/044762
(87) International publication number: WO 2020/148987

(57) **Abstract**

The present disclosure provides an air conditioner including a compressor 2 and a drive circuit 50 configured to drive the compressor 2. The drive circuit 50 includes an AC path 3, a rectifier 4 connected to the AC path 3, a DC path 9 on an output side of the rectifier 4, a smoothing capacitor 12 connected to the DC path 9, an inverter 10 connected to the DC path 9, a switch 7 disposed on an electric path from the AC path 3 to the smoothing capacitor 12, and a controller 15 configured to close and open the switch 7 during a preheating operation of supplying electricity for preheating the compressor 2 via the inverter 10.

## Description

### TECHNICAL FIELD

The present disclosure relates to an air conditioner and a preheating operation method to be used in an environment that requires preheating of a compressor.

### BACKGROUND ART

It is occasionally necessary for an air conditioner to be used in a cold region to heat an oil and a refrigerant in a compressor. In view of this, according to a known technique, a compressor is preheated in accordance with a temperature, by operating an inverter for a drive circuit configured to drive the compressor for the purpose of preheating, and feeding a current so as not to rotate a motor of the compressor (refer to, for example, Patent Literature 1).

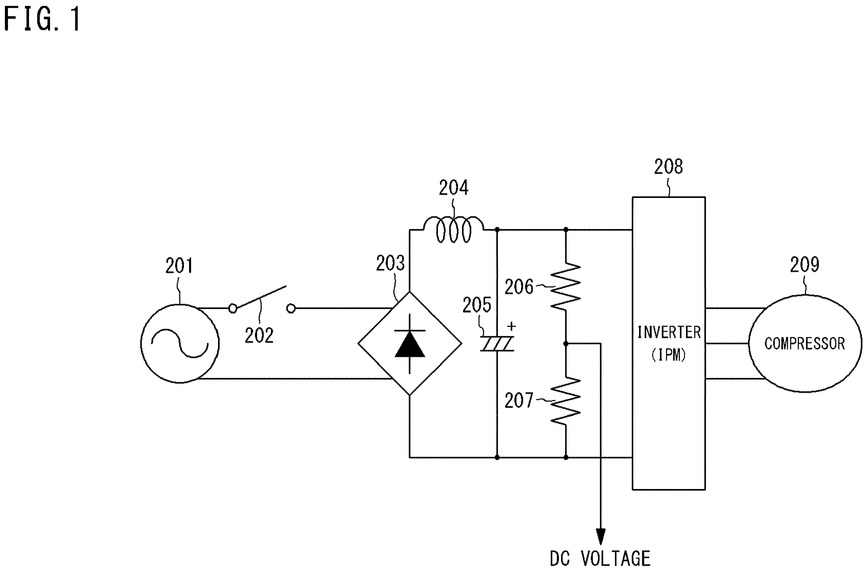

FIG. 1 is a simplified diagram showing only main circuit elements of a drive circuit for a compressor to be mounted in an air conditioner (an outdoor unit). A main circuit relay 202 is disposed on an AC path between an AC power source 201 and a rectifier 203. A DC reactor 204 and a smoothing capacitor 205 are connected to a DC path on a DC output side of the rectifier 203. An inverter 208 assembled into a module as an intelligent power module (IPM) is connected to the DC path. A compressor 209 is connected to the inverter 208. A voltage at the DC path is divided by shunt resistors 206 and 207, and then is applied as a DC voltage to a controller (not illustrated).

The main circuit relay 202 is closed during a normal air conditioning operation of the compressor 209. The inverter 208 outputs three-phase AC power to rotate the compressor 209. During a preheating operation, the main circuit relay 202 is closed, and the inverter 208 feeds a current to, for example, two of three-phase coils to perform a switching operation that achieves an open-phase operation. During the open-phase operation, the compressor 209 does not rotate, but generates heat by supplying the coils therein with electricity. The compressor 209 is thus preheated. The main circuit relay 202 remains closed during the preheating operation. If power that contributes to preheating of the compressor 209 is, for example, 40 W, power to be consumed by the drive circuit, that is, power which the AC power source 201 supplies is, for example, 70 to 80 W higher than the power that contributes to preheating of the compressor 209.

### CITATION LIST

### [PATENT LITERATURE]

Patent Literature 1: Japanese Unexamined Patent Publication No. 2000-205627

### SUMMARY OF INVENTION

### TECHNICAL PROBLEM

As described above, a power loss not contributing to preheating occurs during a preheating operation.

An object of the present disclosure is to reduce power to be supplied for preheating.

### SOLUTION TO PROBLEM

(1) The present disclosure provides an air conditioner including a compressor and a drive circuit configured to drive the compressor. The drive circuit includes an AC path, a rectifier connected to the AC path, a DC path on an output side of the rectifier, a smoothing capacitor connected to the DC path, an inverter connected to the DC path, a switch disposed on an electric path from the AC path to the smoothing capacitor, and a controller configured to close and open the switch during a preheating operation of supplying electricity for preheating the compressor via the inverter.
   With this configuration, the air conditioner enables reduction in power loss for preheating.
   The following configurations (2) to (6) are accompanying or selective configurations.
(2) In the air conditioner, a DC reactor is disposed on the DC path, and the AC path, the rectifier, the DC reactor, and the smoothing capacitor are arranged in this order from the AC path to the smoothing capacitor.
   This configuration enables reduction in relatively large power loss at the DC reactor, in addition to reduction in power loss at the rectifier.
(3) In the air conditioner, the controller repeatedly closes and opens the switch during the preheating operation.
   This configuration enables suppression in excessive voltage drop at the DC path, periodical discharge from the smoothing capacitor, and reduction in power loss, through repetitive charge and discharge, even when the smoothing capacitor has a relatively small capacity (e.g., several tens of microfarads).
(4) In the air conditioner, the controller closes the switch when a voltage at the DC path drops to a predetermined voltage threshold value.
   This configuration enables suppression in voltage drop at the DC path to be lower than the voltage threshold value.
(5) In the air conditioner, the switch includes a preheating switch constituting a bypass circuit arranged in parallel with a main circuit switch on the AC path, and the controller opens the main circuit switch during the preheating operation.
   This configuration enables the preheating operation by opening and closing the preheating switch with the main circuit switch opened.
(6) In the air conditioner, the bypass circuit includes the preheating switch and a current suppressing element connected in series.
   This configuration allows the current suppressing element to reduce an inrush current at the moment of closing the preheating switch that is in the open state.
(7) The present disclosure also provides a preheating operation method using a drive circuit configured to drive a compressor in an air conditioner. The preheating operation method includes: a first period of supplying power from an AC path to a DC path on which a smoothing capacitor is disposed, via a rectifier, and preheating the compressor with the power from the AC path, the power being supplied to the compressor from the DC path via an inverter; and a second period of stopping power supply from the AC path, and preheating the compressor with discharge power from the smoothing capacitor, the discharge power being supplied to the compressor via the inverter.

With this configuration, the preheating operation method enables reduction in power loss for preheating.

### BRIEF DESCRIPTION OF DRAWINGS

FIG. 1 is a simplified diagram showing only main circuit elements of a drive circuit for a compressor to be mounted in a conventional air conditioner.
FIG. 2 is a circuit diagram of an exemplary drive circuit for a compressor in an air conditioner (an outdoor unit).
FIG. 3 is a flowchart of an exemplary procedure of a preheating operation.
FIG. 4 is a time chart of, for example, an operation, a voltage, and power as to components during a preheating operation.

### DESCRIPTION OF EMBODIMENTS

### «Exemplary configuration and normal operation of drive circuit»

An embodiment will be described below.

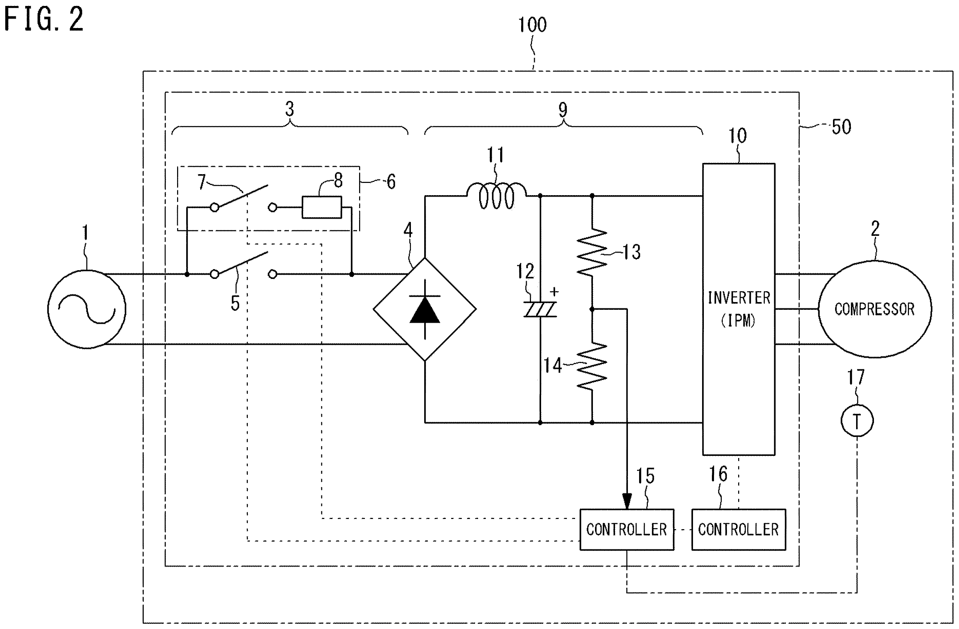

FIG. 2 is a circuit diagram of an exemplary drive circuit 50 for a compressor 2 in an air conditioner (an outdoor unit) 100. For example, the drive circuit 50 is mounted on one printed circuit board. A main circuit switch 5 is disposed on one of two AC paths 3 led from an AC power source 1. A bypass circuit 6 is connected to the main circuit switch 5 in parallel. The bypass circuit 6 includes a preheating switch 7 and a current suppressing element 8 connected in series. The current suppressing element 8 suppresses an inrush current when the preheating switch 7 is closed. Suppressing the inrush current retards deterioration in the preheating switch 7 and increases the durable number of switching operations.

Each of the main circuit switch 5 and the preheating switch 7 may be an excitation mechanical contact relay. Each of the main circuit switch 5 and the preheating switch 7 may alternatively be a semiconductor relay or a semiconductor switch element. The current suppressing element 8 is resistor or a negative temperature coefficient (NTC) thermistor. In the NTC thermistor, a resistance value decreases as a temperature increases due to energization.

A full-bridge rectifier 4 is connected to the AC paths 3. A DC reactor 11 is disposed on one of two DC paths 9 from a DC output end of the rectifier 4 to an inverter 10 (a DC link). The inverter 10 is assembled into a module as an intelligent power module (IPM). A smoothing capacitor 12 and two shunt resistors 13 and 14 connected in series are disposed closer to the inverter 10 than the DC reactor 11 is, and are connected between the two DC paths 9.

Detecting a voltage at an interconnection point between the two shunt resistors 13 and 14 derives a DC voltage at the DC paths 9 (a voltage across the smoothing capacitor 12). The voltage at the interconnection point between the two shunt resistors 13 and 14 is applied to a controller 15. The controller 15 includes a central processing unit (CPU) and a memory, and achieves required control by executing a program recorded in the memory.

The controller 15 receives an output signal from a temperature sensor 17 that detects a temperature near the compressor 2. The controller 15 opens and closes each of the main circuit switch 5 and the preheating switch 7. The inverter 10 is provided with a dedicated controller 16. The inverter 10 performs a switching operation, based on a command from the controller 16. The controller 16 includes a CPU and a memory, and achieves required control by executing a program recorded in the memory. The controllers 15 and 16 may exchange control information with each other. The controllers 15 and 16 may be combined into one controller.

In the drive circuit 50 of the air conditioner 100 having the configuration described above, the main circuit switch 5 is closed, while the preheating switch 7 is opened during a normal air conditioning operation. The inverter 10 performs the switching operation in accordance with a command from the controller 16, and drives the compressor 2 to rotate the compressor 2.

The rectifier 4 causes a power loss upon AC/DC conversion. The DC reactor 11 also causes a power loss due to energization. The same applies to the current suppressing element 8. In a preheating operation to be described below, control is performed in consideration of the power losses.

### <<Preheating operation>>

Next, the preheating operation will be described.

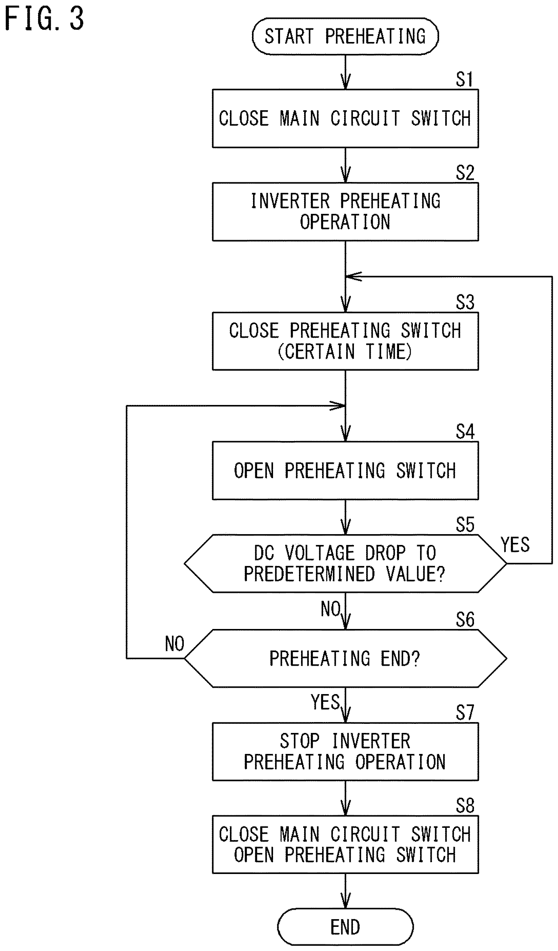

FIG. 3 is a flowchart of an exemplary procedure of the preheating operation. The controller 15 carries out the flowchart. The controller 16 also carries out the flowchart in cooperation with the controller 15 as required, in accordance with a command from the controller 15. For example, the preheating operation is performed when a temperature detected by the temperature sensor 17 is equal to or less than a predetermined temperature in a state in which the air conditioner 100 stops the air conditioning operation. After a start of the preheating operation, for example, the controller 15 may terminate the preheating when the temperature detected by the temperature sensor 17 exceeds the predetermined temperature, or may terminate the preheating after a lapse of a certain time from the start of the preheating operation.

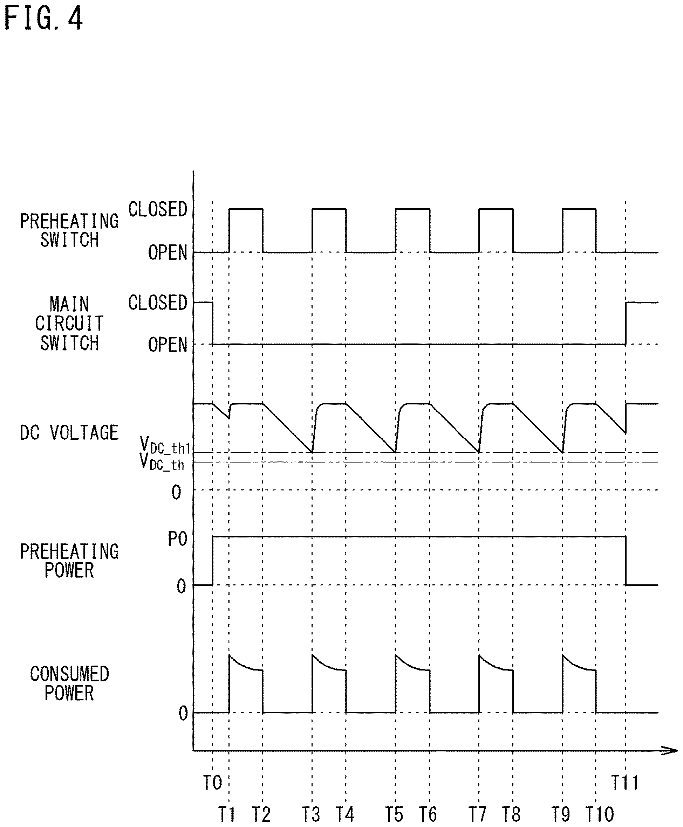

FIG. 4 is a time chart of, for example, an operation, a voltage, and power as to the components during the preheating operation. In FIG. 4, the horizontal axis represents a time. FIG. 4 illustrates, from above, open and closed states of the preheating switch 7 ("closed": H level, "open": L level), open and closed states of the main circuit switch 5, a DC voltage at the DC paths 9, preheating power supplied to the compressor 2, and consumed power by the drive circuit 50. With reference to FIG. 4, next, a description will be given of the preheating operation in accordance with the flowchart of FIG. 3.

As illustrated in FIG. 3, in order to start preheating, the controller 15 opens the main circuit switch 5 (step S1). The main circuit switch 5 is open throughout the preheating operation. In FIG. 4, a time T0 corresponds to the time when the controller 15 opens the main circuit switch 5. At this time, the preheating switch 7 is also open. The controller 15 issues a command to the controller 16, so that the controller 16 causes the inverter 10 to operate for the preheating operation (step S2).

The operation for the preheating operation, which the inverter 10 performs, is, for example, an open-phase operation for the compressor 2. In the open-phase operation, a current is fed to two of the three-phase motor coils in the compressor 2 so as not to generate a rotating magnetic field. The motor coils, through which the current has flowed, generate heat to preheat the compressor 2. This preheating allows separation of a refrigerant dissolved in an oil from the oil.

In addition, induction heating also enables the preheating operation. In this case, a high-frequency current is fed to two of the three-phase motor coils in the compressor 2 so as not to cause a rotating magnetic field. The motor coils, through which the high-frequency current flows, generate heat to preheat the compressor 2. This preheating allows separation of the refrigerant dissolved in the oil from the oil.

When the inverter 10 starts the preheating operation, preheating power P0 is supplied to the inverter 10 by a discharge from the smoothing capacitor 12 (FIG. 4). At this time, since the AC power source 1 supplies no power, the DC voltage starts to drop due to the discharge from the smoothing capacitor 12 (immediately after the time T0 in FIG. 4).

Next, the controller 15 closes the preheating switch 7 for a certain time from a time T1 to a time T2 (step S3). The certain time is a time sufficient for bringing the smoothing capacitor 12 into a fully charged state.

Next, the controller 15 opens the preheating switch 7 at the time T2 (step S4). The controller 15 opens the preheating switch 7 to interrupt the power supply from the AC paths 3, but maintains supply of the preheating power to the inverter 10 by the discharge from the smoothing capacitor 12. The DC voltage drops due to the discharge from the smoothing capacitor 12. The controller 15 repeatedly carries out steps S4, S5, and S6 until the DC voltage drops to a predetermined voltage threshold value V_{DC_th1} (step S5), unless the preheating ends (step S6). The voltage threshold value V_{DC_th1} is slightly larger than an undervoltage abnormality threshold value V_{DC_th} so as not to decrease to a level recognized abnormal as a shortage of the DC voltage.

At a time T3, when the DC voltage drops to the predetermined value V_{DC_th1} ("YES" in step S5), the controller 15 closes the preheating switch 7 for a certain time from the time T3 to a time T4 (step S3). This certain time is equal to the foregoing time from the time T1 to the time T2.

Thereafter, the controller 15 opens the preheating switch 7 (times T4 to T5, times T6 to T7, times T8 to T9) and closes the preheating switch 7 (times T5 to T6, times T7 to T8, times T9 to T10) repeatedly in a manner similar to that described above. When the preheating ends ("YES" in step S6), the controllers 15 and 16 stop the preheating operation for the inverter 10 (step S7). Next, the controller 15 closes the main circuit switch 5, and opens the preheating switch 7 or maintains the open state of the preheating switch 7 (step S8). The preheating operation then ends at a time T11.

In the preheating operation, as illustrated in the lowermost portion of FIG. 4, the consumed power by the drive circuit 50 (the power supplied from the AC power source 1 through the AC paths 3) is zero during the period that the preheating switch 7 is open. This is because the preheating power is supplied to the inverter 10 by the discharge from the smoothing capacitor 12 during the period that the preheating switch 7 is open. Accordingly, no power loss occurs at the DC reactor 11, the rectifier 4, and the current suppressing element 8 during the period that the preheating switch 7 is open. As to the entire preheating operation period, a power loss is suppressed by a period during which no power loss occurs.

There are air conditioners for home use and air conditioners for business use. The air conditioners for business use are higher in power for a preheating operation than the air conditioners for home use, and tend to cause a higher power loss not contributing to preheating. For this reason, suppressing a power loss during a preheating operation increases a power loss reduction effect particularly in air conditioners for business use.

According to the foregoing disclosure, the preheating switch 7 in the bypass circuit 6 for the main circuit switch 5 is used as a switch to be opened and closed during a preheating operation. However, the DC reactor 11 also produces an inrush current suppression effect to a certain degree. Therefore, a switch to be opened and closed during the preheating operation is not limited to the preheating switch 7. For example, an effect similar to that described above is also produced in such a manner that the main circuit switch 5 is opened and closed during the preheating operation. Alternatively, a switch to be opened and closed during the preheating operation may be disposed between the rectifier 4 and the DC reactor 11. In short, it is necessary to provide a switch on an electric path from the AC paths 3 to the smoothing capacitor 12.

### <<Summary of the disclosure>>

For example, the foregoing disclosure may be summarized as follows.

In the drive circuit 50 of the air conditioner 100 according to the present disclosure, the switch (e.g., the preheating switch 7) is disposed on the electric path from the AC paths 3 to the smoothing capacitor 12. The controller 15 closes and opens the switch during the preheating operation of supplying electricity for preheating the compressor 2 via the inverter 10.

In the drive circuit 50 of the air conditioner 100, a source of directly supplying power for preheating differs between the case where the switch is closed and the case where the switch is open. In the state in which the switch is closed, the smoothing capacitor 12 is charged with the power on the AC paths 3, the power being supplied to the smoothing capacitor 12 via the rectifier 4, and the compressor 2 is preheated with the power supplied to the DC path 9, the power being supplied to the compressor 2 via the inverter 10. In the state in which the switch is open, although power supply from the AC paths 3 stops, the compressor 2 is preheated with the discharge power from the smoothing capacitor 12, the discharge power being supplied to the compressor 2 via the inverter 10. In the state in which the switch is open, no current is fed from the AC paths 3 to the rectifier 4; therefore, the rectifier 4 causes no power loss upon at least AC/DC conversion. As described above, providing the period, for which the switch is open, during the preheating operation enables reduction in power loss for preheating.

The DC reactor 11 is disposed on one of the DC paths 9. The AC paths 3, the rectifier 4, the DC reactor 11, and the smoothing capacitor 12 are arranged in this order from the AC paths 3 to the smoothing capacitor 12. With this configuration, no current flows through the rectifier 4 and the DC reactor 11 in the state in which the switch is open. This configuration therefore enables reduction in relatively large power loss at the DC reactor 11, in addition to reduction in power loss at the rectifier 4.

The controller 15 repeatedly closes and opens the switch during the preheating operation. This configuration enables suppression in excessive voltage drop at the DC paths 9, periodical discharge from the smoothing capacitor 12, and reduction in power loss, through repetitive charge and discharge, even when the smoothing capacitor 12 has a relatively small capacity (e.g., several tens of microfarads).

The switch is, for example, the preheating switch 7 constituting the bypass circuit 6 arranged in parallel with the main circuit switch 5 on one of the AC paths 3, and the controller 15 opens the main circuit switch 5 during the preheating operation. This configuration enables the preheating operation by opening and closing the preheating switch 7 with the main circuit switch 5 opened.

The bypass circuit 6 includes the preheating switch 7 and the current suppressing element 8 connected in series. This configuration allows the current suppressing element 8 to reduce an inrush current at the moment of closing the preheating switch that is in the open state.

The controller 15 closes the switch when a voltage at the DC paths 9 drops to the predetermined voltage threshold value. This configuration therefore enables suppression in voltage drop at the DC paths 9 to be lower than the voltage threshold value.

The present disclosure also provides the preheating operation method using the drive circuit 50 configured to drive the compressor 2 in the air conditioner. The preheating operation method includes: the first period of supplying power from the AC paths 3 to the DC paths 9 on which the smoothing capacitor 12 is disposed, via the rectifier 4, and preheating the compressor 2 with the power from the AC paths 3, the power being supplied to the compressor 2 from the DC paths 9 via the inverter 10; and the second period of stopping power supply from the AC paths 3, and preheating the compressor 2 with discharge power from the smoothing capacitor 12, the discharge power being supplied to the compressor 2 via the inverter 10.

According to the preheating operation method, a source of directly supplying power for preheating differs between the first period and the second period. In the first period, the smoothing capacitor 12 is charged with the power on the AC paths 3, the power being supplied to the smoothing capacitor 12 via the rectifier 4, and the compressor 2 is preheated with the power supplied to the DC paths 9, the power being supplied to the compressor 2 via the inverter 10. In the second period, although power supply from the AC paths 3 stops, the compressor 2 is preheated with the discharge power from the smoothing capacitor 12, the discharge power being supplied to the compressor 2 via the inverter 10. In the second period, no current is fed from the AC paths 3 to the rectifier 4; therefore, the rectifier 4 causes no power loss upon at least AC/DC conversion. As described above, the second period enables reduction in power loss for preheating.

While various embodiments have been described herein above, it is to be appreciated that various changes in form and detail may be made without departing from the spirit and scope presently or hereafter claimed.

### REFERENCE SIGNS LIST

1: AC POWER SOURCE
2: COMPRESSOR
3: AC PATH
4: RECTIFIER
5: MAIN CIRCUIT SWITCH
6: BYPASS CIRCUIT
7: PREHEATING SWITCH
8: CURRENT SUPPRESSING ELEMENT
9: DC PATH
10: INVERTER
11: DC REACTOR
12: SMOOTHING CAPACITOR
13, 14: SHUNT RESISTOR
15, 16: CONTROLLER
17: TEMPERATURE SENSOR
50: DRIVE CIRCUIT
100: AIR CONDITIONER
201: AC POWER SOURCE
202: MAIN CIRCUIT RELAY
203: RECTIFIER
204: DC REACTOR
205: SMOOTHING CAPACITOR
206, 207: SHUNT RESISTOR
208: INVERTER
209: COMPRESSOR

## Claims

1. An air conditioner including a compressor (2) and a drive circuit (50) configured to drive the compressor (2), wherein the drive circuit (50) comprises:
an AC path (3);
a rectifier (4) connected to the AC path (3);
a DC path (9) on an output side of the rectifier (4);
a smoothing capacitor (12) connected to the DC path (9);
an inverter (10) connected to the DC path (9);
a switch (7) disposed on an electric path from the AC path (3) to the smoothing capacitor (12); and
a controller (15) configured to close and open the switch (7) during a preheating operation of supplying electricity for preheating the compressor (2) via the inverter (10).

2. The air conditioner according to claim 1, wherein
a DC reactor (11) is disposed on the DC path, and
the AC path (3), the rectifier (4), the DC reactor (11), and the smoothing capacitor (12) are arranged in this order from the AC path (3) to the smoothing capacitor (12).

3. The air conditioner according to claim 1 or 2, wherein
the controller (15) repeatedly closes and opens the switch (7) during the preheating operation.

4. The air conditioner according to any one of claims 1 to 3, wherein
the controller (15) closes the switch (7) when a voltage at the DC path (9) drops to a predetermined voltage threshold value.

5. The air conditioner according to any one of claims 1 to 3, wherein
the switch (7) comprises a preheating switch (7) constituting a bypass circuit (6) arranged in parallel with a main circuit switch (5) on the AC path (3), and
the controller (15) opens the main circuit switch (5) during the preheating operation.

6. The air conditioner according to claim 5, wherein
the bypass circuit (6) includes the preheating switch (7) and a current suppressing element (8) connected in series.

7. A preheating operation method using a drive circuit (50) configured to drive a compressor (2) in an air conditioner,
the preheating operation method comprising:
a first period of supplying power from an AC path (3) to a DC path (9) on which a smoothing capacitor (12) is disposed, via a rectifier (4), and preheating the compressor (2) with the power from the AC path (3), the power being supplied to the compressor (2) from the DC path (9) via an inverter (10); and
a second period of stopping power supply from the AC path (3), and preheating the compressor (2) with discharge power from the smoothing capacitor (12), the discharge power being supplied to the compressor (2) via the inverter (10).
